# EUROPÄISCHE PATENTANMELDUNG

(11) **EP 3 451 498 A1**
(43) Veröffentlichungstag der Anmeldung: **06.03.2019**
(21) Anmeldenummer: 17188593.2
(22) Anmeldetag: 30.08.2017
(51) Int. Cl.: H02K 1/27

(54) **MEHRPOLIGER ROTOR MIT BROTLAIBFÖRMIGEN PERMANENTMAGNETEN**

(71) Anmelder: Lakeview Innovation Ltd., 6374 Buochs (CH)
(72) Erfinder: Schulze, Dr., Jens, 6074 Giswil (CH)
(74) Vertreter: Grünecker Patent- und Rechtsanwälte PartG mbB

(57) **Zusammenfassung**

Die vorliegende Erfindung betrifft einen mehrpoligen Rotor für einen Elektromotor, wobei der Rotor einen Rotorkern und mehrere einzelne Permanentmagneten aufweist, die über einen Umfang des Rotors verteilt angeordnet sind und auf derjenigen Seite, die dem Luftspalt zwischen einem Stator des Elektromotors und dem Rotor zugewandt ist, in einem Querschnitt des Rotors betrachtet, der orthogonal zu einer Achse des Rotors verläuft, eine konvexe Krümmung aufweisen. Erfindungsgemäß ist vorgesehen, dass jeweils vier in Umfangsrichtung des Rotors nebeneinander liegende Permanentmagneten zusammen ein magnetisches Polpaar bilden, wobei die Magnetisierungsrichtung jedes einzelnen Permanentmagneten zu einer Bezugsebene, die durch die Achse des Rotors und durch die Mitte des jeweiligen Permanentmagneten verläuft, einen Winkel zwischen 30° und 60° einschließt.

## Beschreibung

Die vorliegende Erfindung betrifft einen mehrpoligen Rotor für einen Elektromotor nach dem Oberbegriff des unabhängigen Anspruchs 1.

Ein derartiger Rotor weist einen Rotorkern und mehrere einzelne Permanentmagneten auf, die über den Umfang des Rotors verteilt angeordnet sind und auf derjenigen Seite, die dem Luftspalt zwischen einem Stator des Elektromotors und dem Rotor zugewandt ist, in einem Querschnitt des Rotors betrachtet, der orthogonal zu einer Achse des Rotors verläuft, eine konvexe Krümmung aufweisen.

Ein Rotor gemäß dem Oberbegriff des unabhängigen Anspruchs 1 ist beispielsweise aus US 20050264122 A1 bekannt. Bei diesem Rotor sind die Permanentmagneten, bezogen auf die Achse des Rotors, in radialer Richtung magnetisiert. Jeweils zwei benachbarte Permanentmagneten bilden ein magnetisches Polpaar. Die konvexe Krümmung der einzelnen Permanentmagneten bietet den Vorteil, dass Rastmomente weitgehend vermieden werden.

Die vorliegende Erfindung hat sich zur Aufgabe gestellt, einen mehrpoligen Rotor der gattungsgemäßen Art dahingehend zu verbessern, dass das Rastmoment weiter reduziert wird.

Die Erfindung wird durch die Merkmale des unabhängigen Anspruchs 1 gelöst. Demnach liegt bei einem mehrpoligen Rotor gemäß dem Oberbegriff des unabhängigen Anspruchs 1 dann eine erfindungsgemäße Lösung der Aufgabe vor, wenn jeweils vier in Umfangsrichtung des Rotors nebeneinanderliegende Permanentmagneten zusammen ein magnetisches Polpaar bilden, wobei die Magnetisierungsrichtung jedes einzelnen Permanentmagneten zu einer Bezugsebene, die durch die Achse des Rotors und durch die Mitte des jeweiligen Permanentmagneten verläuft, einen Winkel α zwischen 30° und 60° einschließt.

Die Erfindung bietet den Vorteil, dass ein Rastmoment besonders wirksam vermieden wird. Die einzelnen Permanentmagneten sind vorzugsweise gleichmäßig über den Umfang des Rotors verteilt angeordnet. Bei der Achse des Rotors handelt es sich um die Drehachse bzw. um die Rotationssymmetrieachse des Rotors. Weiter vorzugsweise handelt es sich bei dem Rotor um einen Innenläufer, wobei die Permanentmagneten am Außenumfang des Rotors angeordnet sind. Gemäß der vorliegenden Erfindung können nicht zwei beliebige, nebeneinanderliegende Permanentmagneten einen magnetischen Pol bilden. Jeder vierte Permanentmagnet hat in Bezug auf seine jeweilige Bezugsebene dieselbe Magnetisierungsrichtung. Dabei bilden jeweils die ersten beiden Permanentmagneten einer Vierergruppe zusammen einen magnetischen Pol, beispielsweise einen magnetischen Nordpol. Der dritte Permanentmagnet und der vierte Permanentmagnet der Vierergruppe bilden zusammen einen entgegengesetzten magnetischen Pol, beispielsweise einen magnetischen Südpol. Die Anzahl der einzelnen Permanentmagneten muss somit durch die Zahl 4 teilbar sein.

Vorteilhafte Ausführungsformen der vorliegenden Erfindung sind Gegenstand der Unteransprüche.

Gemäß einer bevorzugten Ausführungsform der vorliegenden Erfindung schließt die Magnetisierungsrichtung jedes einzelnen Permanentmagneten zu der jeweiligen Bezugsebene einen Winkel zwischen 40° und 50° ein. Dabei lässt sich das Rastmoment am besten vermeiden, wenn der Winkel, den die Magnetisierungsrichtung jedes einzelnen Permanentmagneten zu der jeweiligen Bezugsebene einschließt, weiter vorzugsweise 45° beträgt.

Weiter vorzugsweise bilden jeweils zwei in Umfangsrichtung des Rotors nebeneinanderliegende Permanentmagneten zusammen einen magnetischen Pol, wobei die Magnetisierungsrichtungen dieser beiden Permanentmagneten in Bezug auf eine Zwischenebene, die mittig zwischen diesen beiden Permanentmagneten und durch die Achse des Rotors verläuft, symmetrisch zueinander sind.

Weiter vorzugsweise weist der dritte Permanentmagnet einer Gruppe von vier Permanentmagneten, die in Umfangsrichtung unmittelbar aufeinanderfolgen, bezogen auf die jeweilige Bezugsebene eine Magnetisierungsrichtung auf, die entgegengesetzt zu der auf die jeweilige Bezugsebene bezogenen Magnetisierungsrichtung des ersten Permanentmagneten dieser Gruppe von Permanentmagneten verläuft, wobei der vierte Permanentmagnet dieser Gruppe von Permanentmagneten bezogen auf die jeweilige Bezugsebene eine Magnetisierungsrichtung aufweist, die entgegengesetzt zu der auf die jeweilige Bezugsebene bezogenen Magnetisierungsrichtung des zweiten Permanentmagneten dieser Gruppe von Permanentmagneten verläuft.

Gemäß einer weiteren bevorzugten Ausführungsform der vorliegenden Erfindung berühren sich die Permanentmagneten seitlich und bilden zusammen einen geschlossenen Ring. Dadurch wird ein hoher Wirkungsgrad erreicht. Zudem entfällt eine aufwändige Positionierung der Permanentmagneten auf dem Rotorkern bei der Herstellung des Rotors, was sowohl den Aufwand als auch die Kosten bei der Produktion senkt.

Besonders vorteilhaft ist es in diesem Zusammenhang, wenn die Seitenflächen der Permanentmagneten in Bezug auf die Achse des Rotors radial verlaufen, sodass die Permanentmagneten seitlich flächig aneinander anliegen.

Zur Vermeidung eines Rastmoments ist es von besonderem Vorteil, wenn der Radius der konvexen Krümmung kleiner ist als der Radius eines die Permanentmagneten unmittelbar am Luftspalt einhüllenden Kreises um die Achse des Rotors. Der Radius des einhüllenden Kreises entspricht dem maximalen Außendurchmesser des Rotors, sofern es sich bei dem Rotor um einen Innenläufer handelt. Besonders bevorzugt beträgt der Radius der konvexen Krümmung zwischen 15% und 70%, bevorzugt zwischen 20 % und 50 % des Radius des die Permanentmagneten unmittelbar am Luftspalt einhüllenden Kreises um die Achse des Rotors.

Gemäß einer weiteren bevorzugten Ausführungsform der vorliegenden Erfindung sind die Permanentmagneten mittels Klebstoff miteinander und/oder an dem Rotorkern des Rotors befestigt. Dadurch ergibt sich eine besonders einfache und kostengünstige Herstellung des erfindungsgemäßen Rotors. Der Rotorkern kann entweder aus einem weichmagnetischen Material bestehen, sodass der Rotorkern einen magnetischen Rückschluss für die Permanentmagneten bildet. Alternativ kann für den Rotorkern auch ein unmagnetisches Material verwendet werden.

Anstatt die Permanentmagneten miteinander und/oder mit dem Rotorkern zu verkleben, können die Permanentmagneten auch mittels einer Bandagierung an dem Rotorkern des Rotors befestigt werden. Die Bandagierung kann auch zusätzlich zur Verklebung erfolgen.

Gemäß einer weiteren Ausführungsform der vorliegenden Erfindung ist die der konvex gekrümmten Seite gegenüberliegende Rückseite der Permanentmagneten eben ausgestaltet. Die Rückseite verläuft sozusagen tangential zur Mantelfläche des Rotorkerns, sofern es sich bei dem Rotor um einen Innenläufer handelt. Bei dieser Ausführungsform ist der Herstellungsaufwand für die Permanentmagneten relativ gering.

Die Montage des erfindungsgemäßen Rotors kann vereinfacht werden, wenn die der konvex gekrümmten Seite gegenüberliegende Rückseite der Permanentmagneten gemäß einer alternativen Ausführungsform eine Krümmung aufweist, die dem Radius des Rotorkerns entspricht. Bei dieser Ausführungsform ergibt sich ferner ein besonders hoher Wirkungsgrad durch eine Optimierung des Magnetfelds, das durch den Rotor aufgebaut wird. Der Radius des Rotorkerns, an den die Krümmung der Rückseite der Permanentmagneten angepasst ist, ist bei einem Innenläufer der Außenradius des Rotorkerns.

Der Rotor kann gemäß einer weiteren bevorzugten Ausführungsform der vorliegenden Erfindung insgesamt 16 einzelne Permanentmagneten aufweisen. Entscheidend ist jedenfalls, dass die Anzahl der Permanentmagneten durch die Zahl 4 teilbar ist.

Bevorzugt sind die Permanentmagneten gemäß einer weiteren Ausführungsform der vorliegenden Erfindung im Querschnitt brotlaibförmig ausgestaltet.

Die Erfindung stellt auch einen elektrischen Motor mit einem Stator und einem erfindungsgemäßen Rotor bereit, wobei der Rotor gemäß einer oder mehrerer der zuvor beschriebenen Ausführungsformen ausgestaltet sein kann.

Ausführungsbeispiele der vorliegenden Erfindung werden im Folgenden anhand von Zeichnungen näher erläutert.

Es zeigen:
- Figur 1:: eine Schrägansicht eines mehrpoligen Rotors gemäß einem ersten Ausführungsbeispiel der vorliegenden Erfindung,
- Figur 2:: einen Querschnitt durch den erfindungsgemäßen Rotor aus Figur 1,
- Figur 3:: eine Detailansicht der Darstellung aus Figur 2,
- Figur 4:: eine Abwandlung des erfindungsgemäßen mehrpoligen Rotors aus den Figuren 1 bis 3 im Querschnitt,
- Figur 5:: eine Detailansicht der Darstellung aus Figur 4, und
- Figur 6:: einen Querschnitt durch einen mehrpoligen Rotor gemäß einem weiteren Ausführungsbeispiel der vorliegenden Erfindung.

Für die folgenden Ausführungen gilt, dass gleiche Teile durch gleiche Bezugszeichen bezeichnet werden. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen.

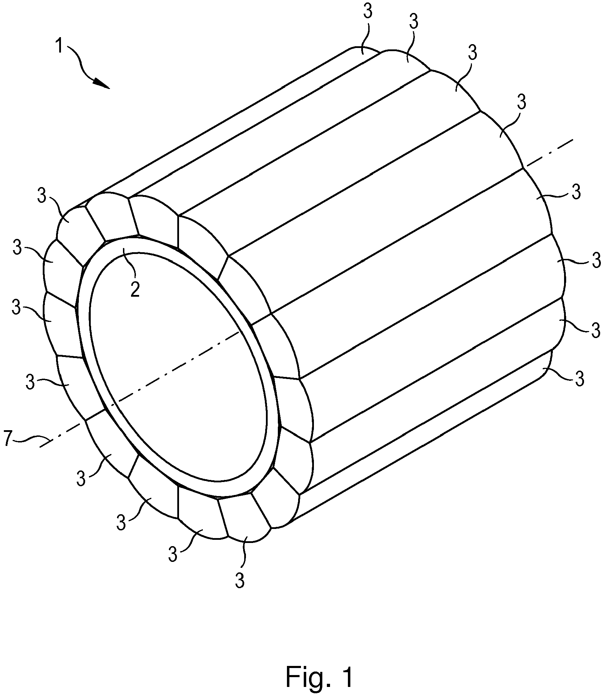

Figur 1 zeigt ein erstes Ausführungsbeispiel eines erfindungsgemäßen mehrpoligen Rotors 1 in einer Schrägansicht. Der Rotor 1 weist einen Rotorkern 2 sowie eine Vielzahl von im wesentlichen stabförmigen Permanentmagneten 3 auf, die gleichmäßig über den Umfang des Rotorkerns verteilt angeordnet sind. Bei dem gezeigten Ausführungsbeispiel sind insgesamt 16 einzelne Permanentmagneten 3 vorgesehen. Die Achse des Rotors ist in den Figuren mit dem Bezugszeichen 7 bezeichnet.

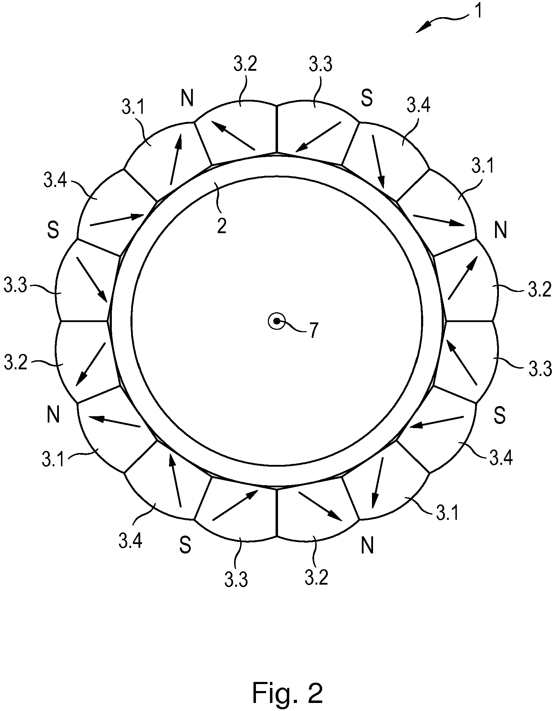

Wie insbesondere aus Figur 2 ersichtlich ist, weisen die Permanentmagneten, in einem Querschnitt orthogonal zur Achse 7 des Rotors betrachtet, auf der Außenseite eine konvexe Krümmung auf. Die Permanentmagneten sind dabei im Querschnitt brotlaibförmig ausgestaltet. Jeweils vier benachbarte bzw. in Umfangsrichtung des Rotors aufeinanderfolgende Permanentmagneten bilden zusammen ein magnetisches Polpaar des Rotors. Der erste Permanentmagnet 3.1 und der zweite Permanentmagnet 3.2 einer solchen Vierergruppe bilden zusammen einen magnetischen Nordpol N des Rotors. Der dritte Permanentmagnet 3.3 und der vierte Permanentmagnet 3.4 jeder Vierergruppe bilden zusammen einen magnetischen Südpol S.

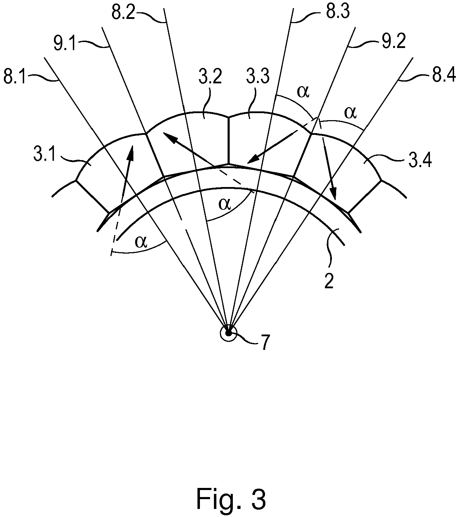

Figur 3 zeigt eine Detailansicht des Querschnitts aus Figur 2. In dieser Detailansicht ist eine Vierergruppe von Permanentmagneten gezeigt. Jedem Permanentmagneten ist eine Bezugsebene 8 zugeordnet, die durch die Achse 7 des Rotors und durch die Mitte des jeweiligen Permanentmagneten verläuft. Die Bezugsebene des ersten Permanentmagneten 3.1 ist mit dem Bezugszeichen 8.1 bezeichnet. Die Bezugsebene des zweiten Permanentmagneten 3.2 ist mit dem Bezugszeichen 8.2 bezeichnet. Die Bezugsebene des dritten Permanentmagneten 3.3 ist mit dem Bezugszeichen 8.3 bezeichnet. Und die Bezugsebene des vierten Permanentmagneten 3.4 ist mit dem Bezugszeichen 8.4 bezeichnet. Die Magnetisierungsrichtung jedes einzelnen Permanentmagneten schließt zu der jeweiligen Bezugsebene des Permanentmagneten einen Winkel α von 45° ein. Dabei sind die Magnetisierungsrichtungen des ersten Permanentmagneten 3.1 und des zweiten Permanentmagneten 3.2 in Bezug auf eine Zwischenebene 9.1, die mittig zwischen diesen beiden Permanentmagneten und durch die Achse 7 des Rotors verläuft, symmetrisch zueinander. Gleichermaßen sind die Magnetisierungsrichtungen des dritten Permanentmagneten 3.3 und des vierten Permanentmagneten 3.4 in Bezug auf eine zweite Zwischenebene 9.2, die mittig zwischen den Permanentmagneten 3.3 und 3.4 sowie durch die Achse 7 des Rotors verläuft, ebenfalls symmetrisch zueinander. Ferner ist zu beobachten, dass der dritte Permanentmagnet 3.3 bezogen auf seine Bezugsebene 8.3 eine Magnetisierungsrichtung aufweist, die entgegengesetzt zu der auf die Bezugsebene 8.1 bezogenen Magnetisierungsrichtung des ersten Permanentmagneten 3.1 verläuft. Der vierte Permanentmagnet 3.4 weist bezogen auf seine Bezugsebene 8.4 eine Magnetisierungsrichtung auf, die entgegengesetzt zu der auf die Bezugsebene 8.2 des zweiten Permanentmagneten verläuft.

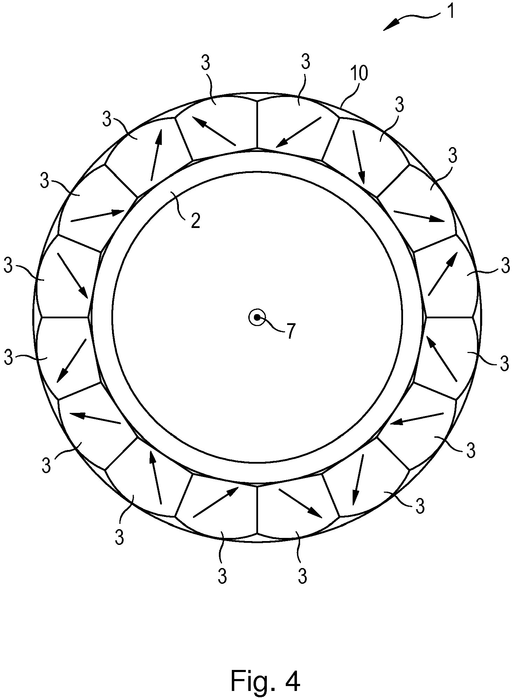

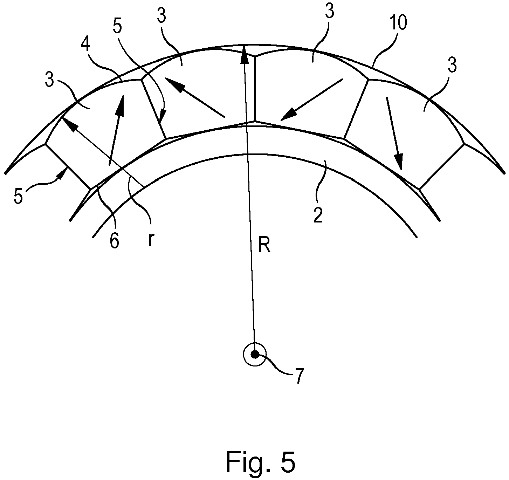

Bei dem Ausführungsbeispiel aus den Figuren 1 bis 3 sind die Permanentmagneten mittels Klebstoff miteinander und an dem Rotorkern 2 des Rotors befestigt. Figur 4 zeigt eine Abwandlung, bei der entweder zusätzlich oder alternativ eine Bandagierung 10 vorgesehen ist, mittels der die Permanentmagneten 3 an dem Rotorkern 2 befestigt sind. Die Bandagierung weist, wie aus Figur 5 ersichtlich ist, einen Radius R bezogen auf die Achse 7 des Rotors auf, der im wesentlichen dem Radius eines Kreises entspricht, der die Permanentmagneten 3 am Außenumfang des Rotors einhüllt. In Figur 5 ist ferner zu erkennen, dass der Radius r der konvexen Krümmung an der Außenseite 4 der Permanentmagneten bedeutend kleiner ist als der Außenradius R des Rotors. Bei den Ausführungsbeispielen, die in den Figuren 1 bis 6 gezeigt sind, beträgt das Verhältnis zwischen dem Radius r und dem Radius R etwa 1/3. Ferner sind bei sämtlichen dargestellten Ausführungsbeispielen die Seitenflächen 5 der Permanentmagneten 3 derart ausgestaltet, dass sie bezogen auf die Achse 7 des Rotors radial verlaufen, sodass die Permanentmagneten 3 seitlich flächig aneinander anliegen.

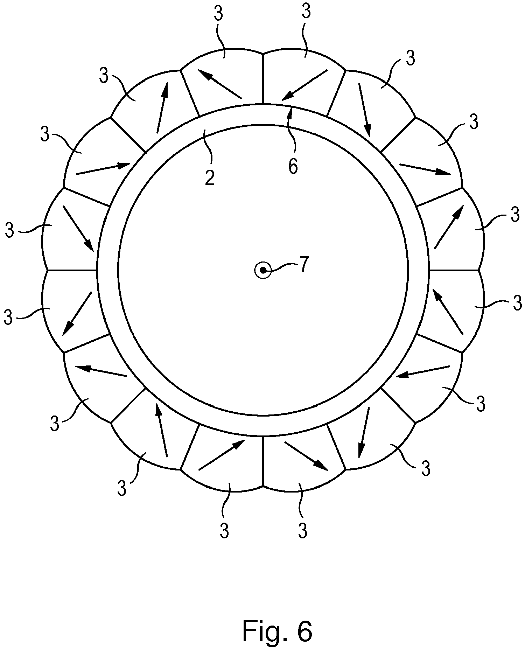

Bei den Ausführungsbeispielen in den Figuren 1 bis 5 ist die Unterseite 6 der Permanentmagneten 3 jeweils eben. Sie verläuft damit tangential zur Mantelfläche des Rotorkerns 2. Figur 6 hingegen zeigt ein Ausführungsbeispiel, bei dem die Unterseite 6 der Permanentmagneten 3 eine Krümmung aufweist, deren Radius an den Radius des Außenumfangs des Rotorkerns 2 angepasst ist, sodass sich die Permanentmagneten 3 an den Außenumfang des Rotorkerns anschmiegen.

## Patentansprüche

1. Mehrpoliger Rotor (1) für einen Elektromotor, wobei der Rotor (1) einen Rotorkern (2) und mehrere einzelne Permanentmagneten (3) aufweist, die über einen Umfang des Rotors (1) verteilt angeordnet sind und auf derjenigen Seite (4), die dem Luftspalt zwischen einem Stator des Elektromotors und dem Rotor (1) zugewandt ist, in einem Querschnitt des Rotors (1) betrachtet, der orthogonal zu einer Achse (7) des Rotors (1) verläuft, eine konvexe Krümmung aufweisen, **dadurch gekennzeichnet, dass** jeweils vier in Umfangsrichtung des Rotors (1) nebeneinander liegende Permanentmagneten (3.1, 3.2, 3.3, 3.4) zusammen ein magnetisches Polpaar (N, S) bilden, wobei die Magnetisierungsrichtung jedes einzelnen Permanentmagneten (3.1, 3.2, 3.3, 3.4) zu einer Bezugsebene (8.1, 8.2, 8.3, 8.4), die durch die Achse (7) des Rotors (1) und durch die Mitte des jeweiligen Permanentmagneten (3.1, 3.2, 3.3, 3.4) verläuft, einen Winkel (α) zwischen 30° und 60° einschließt.

2. Rotor (1) nach Anspruch 1, **dadurch gekennzeichnet, dass** die Magnetisierungsrichtung jedes einzelnen Permanentmagneten (3.1, 3.2, 3.3, 3.4) zu der jeweiligen Bezugsebene (8.1, 8.2, 8.3, 8.4) einen Winkel (α) zwischen 40° und 50° einschließt.

3. Rotor (1) nach Anspruch 2, **dadurch gekennzeichnet, dass** die Magnetisierungsrichtung jedes einzelnen Permanentmagneten (3.1, 3.2, 3.3, 3.4) zu der jeweiligen Bezugsebene (8.1, 8.2, 8.3, 8.4) einen Winkel (α) von 45° einschließt.

4. Rotor (1) nach einem der Ansprüche 1 bis 3, **dadurch gekennzeichnet, dass** jeweils zwei in Umfangsrichtung des Rotors (1) nebeneinander liegende Permanentmagneten (3.1, 3.2, 3.3, 3.4) zusammen einen magnetischen Pol (N, S) bilden, wobei die Magnetisierungsrichtungen dieser beiden Permanentmagneten (3.1, 3.2, 3.3, 3.4) in Bezug auf eine Zwischenebene (9.1, 9.2), die mittig zwischen diesen beiden Permanentmagneten (3.1, 3.2, 3.3, 3.4) und durch die Achse (7) des Rotors (1) verläuft, symmetrisch zueinander sind.

5. Rotor (1) nach einem der Ansprüche 1 bis 4, **dadurch gekennzeichnet, dass** der dritte Permanentmagnet (3.3) einer Gruppe von vier Permanentmagneten (3.1, 3.2, 3.3, 3.4), die in Umfangsrichtung unmittelbar aufeinander folgen, bezogen auf die jeweilige Bezugsebene (8.3) eine Magnetisierungsrichtung aufweist, die entgegengesetzt zu der auf die jeweilige Bezugsebene (8.1) bezogenen Magnetisierungsrichtung des ersten Permanentmagneten (3.1) dieser Gruppe von Permanentmagneten (3.1, 3.2, 3.3, 3.4) verläuft, wobei der vierte Permanentmagnet (3.4) dieser Gruppe von Permanentmagneten (3.1, 3.2, 3.3, 3.4) bezogen auf die jeweilige Bezugsebene (8.4) eine Magnetisierungsrichtung aufweist, die entgegengesetzt zu der auf die jeweilige Bezugsebene (8.2) bezogenen Magnetisierungsrichtung des zweiten Permanentmagneten (3.2) dieser Gruppe von Permanentmagneten (3.1, 3.2, 3.3, 3.4) verläuft.

6. Rotor (1) nach einem der Ansprüche 1 bis 5, **dadurch gekennzeichnet, dass** sich die Permanentmagneten (3) seitlich berühren und zusammen einen geschlossenen Ring bilden.

7. Rotor (1) nach Anspruch 6, **dadurch gekennzeichnet, dass** Seitenflächen (5) der Permanentmagneten (3) in Bezug auf die Achse (7) des Rotors (1) radial verlaufen, so dass die Permanentmagneten (3) seitlich flächig aneinander anliegen.

8. Rotor (1) nach einem der Ansprüche 1 bis 7, **dadurch gekennzeichnet, dass** der Radius (r) der konvexen Krümmung kleiner ist als der Radius (R) eines die Permanentmagneten (3) unmittelbar am Luftspalt einhüllenden Kreises um die Achse (7) des Rotors (1).

9. Rotor (1) nach Anspruch 8, **dadurch gekennzeichnet, dass** der Radius (r) der konvexen Krümmung zwischen 15% und 70%, insbesondere zwischen 20% und 50% des Radius (R) des die Permanentmagneten (3) unmittelbar am Luftspalt einhüllenden Kreises um die Achse (7) des Rotors (1) beträgt.

10. Rotor (1) nach einem der Ansprüche 1 bis 9, **dadurch gekennzeichnet, dass** die Permanentmagneten (3) mittels Klebstoff miteinander und/oder an dem Rotorkern (2) des Rotors (1) befestigt sind.

11. Rotor (1) nach einem der Ansprüche 1 bis 10, **dadurch gekennzeichnet, dass** die Permanentmagneten (3) mittels einer Bandagierung (10) an dem Rotorkern (2) des Rotors (1) befestigt sind.

12. Rotor (1) nach einem der Ansprüche 1 bis 11, **dadurch gekennzeichnet, dass** die der konvex gekrümmten Seite (4) gegenüberliegende Rückseite (6) der Permanentmagneten (3) eben ist.

13. Rotor (1) nach einem der Ansprüche 1 bis 11, **dadurch gekennzeichnet, dass** die der konvex gekrümmten Seite (4) gegenüberliegende Rückseite (6) der Permanentmagneten (3) eine Krümmung aufweist, die dem Radius des Rotorkerns (2) entspricht.

14. Rotor (1) nach einem der Ansprüche 1 bis 13, **dadurch gekennzeichnet, dass** die Permanentmagneten im Querschnitt brotlaibförmig ausgestaltet sind.
